# EUROPEAN PATENT APPLICATION

(11) **EP 2 590 184 A1**
(43) Date of publication of application: **08.05.2013**
(21) Application number: 11814545.7
(22) Date of filing: 28.07.2011
(51) Int. Cl.: H01F 7/126, F16K 31/06, H01F 7/06, H01F 7/16

(54) **ELECTROMAGNETIC DRIVE UNIT**

(30) Priority: 06.08.2010 JP 2010177555
(71) Applicant: Hitachi Construction Machinery Co., Ltd., Bunkyo-ku Tokyo 112-8563 (JP)
(72) Inventor: HIRANO Sakurako, Tsuchiura-shi Ibaraki 300-0013 (JP); YOSHIMOTO Mitsuhiro, Tsuchiura-shi Ibaraki 300-0013 (JP); ITOU Hideaki, Tsuchiura-shi Ibaraki 300-0013 (JP); TAKAO Masaki, Tsuchiura-shi Ibaraki 300-0013 (JP)
(74) Representative: Jansen, Cornelis Marinus
(86) International application number: PCT/JP2011/067286
(87) International publication number: WO 2012/017918

(57) **Abstract**

[Problem]

To provide an electromagnetic drive unit that ensures stabilized sealing performance.

[Solution]

An electromagnetic drive unit according to the present invention includes an inner housing (H) that encloses the plunger (3), a solenoid assembly (SA) that moves the plunger in an axial direction, and a casing (6) that covers the solenoid assembly. A first annular space (50a) for mounting a first sealing member (11) in an annular shape is formed between the inner housing and the solenoid assembly. When the first sealing member has an outer diameter OD1, the first annular space (50a) forms approximately a rectangular shape where any cross-sectional surface of the space satisfies a relation expressed by a distance LA1 < the outer diameter OD1 < a distance LB1. Respective positions where a first surface (SF1) and a second surface (SF2) are in close contact with the first sealing member are formed at a third surface (SF3) side with respect to an intersection point where the second surface (SF2) and a fourth surface (SF4) cross one another in the axial direction.

## Description

### TECHNICAL FIELD

The present invention relates to an electromagnetic drive unit. Especially, the present invention relates to a sealing structure that is appropriate for an electromagnetic drive unit in a type where a solenoid assembly is mounted outside of an inner housing that encloses a plunger.

### BACKGROUND ART

Generally, an electromagnetic drive unit is configured to control power feeding to a solenoid assembly so as to move a plunger in an axial direction. Here, the solenoid assembly is normally configured such that a bobbin with wound coil is wrapped with an exterior mold from outside. In the case where water leaks from a portion where the bobbin is not completely in contact with the exterior mold, a trouble such as a short-circuited coil and disconnection of a coil due to corrosion may occur. In order to prevent these troubles, conventionally, the following structure has been known. This structure covers the solenoid assembly with a casing, and includes a sealing member such as an O-ring mounted on a groove between the casing and the solenoid assembly to seal a gap between the casing and the solenoid assembly.

As a sealing structure using the O-ring, a known technique is disclosed in, for example, Patent Literature 1. This technique disclosed in Patent Literature 1 provides a molded coil that includes an interior member, an exterior member, and a casing that houses these members. The interior member includes a bobbin with a wound coil. The exterior member covers the interior member. In the molded coil, a depressed groove has a cross-sectional surface in a triangular shape that is defined by the three members of the interior member, the exterior member, and the casing. An O-ring is inserted into this depressed groove so as to seal a gap between the respective members. This sealing structure brings the O-ring into close contact with the aforementioned three members to prevent water leakage.

### CITATION LIST

### PATENT LITERATURE

PATENT LITERATURE 1: Japanese Examined Utility Model Application Publication No. 4-3452.

### SUMMARY OF INVENTION

### TECHNICAL PROBLEM

However, in Patent Literature 1, the structure brings the O-ring into close contact with the aforementioned three members to seal the gap. Thus, variation in shape of the depressed groove occurs depending on processing accuracy of each of the members. Accordingly, in the technique disclosed in Patent Literature 1, desired sealing performance might not be obtained, which remains as a problem.

The present invention has been made in view of the above-described circumstances, and it is an object of the present invention to provide an electromagnetic drive unit with the reduced number of members in close contact with a sealing member, thus ensuring stabilized sealing performance. Additionally, it is another object of the present invention to provide an electromagnetic drive unit with the reduced number of processing operations, thus reducing production cost.

### SOLUTION TO PROBLEM

In order to achieve the aforementioned objects, according to a first aspect of the invention, an electromagnetic drive unit includes an inner housing that encloses a plunger, a solenoid assembly, and a casing that covers the solenoid assembly. The solenoid assembly is mounted to surround the inner housing. The solenoid assembly is configured to control power feeding to move the plunger in an axial direction. The inner housing includes a flange portion and a hollow body portion. A driven device is mounted at one end surface side of the flange portion. The hollow body portion is disposed at another end surface side of the flange portion. The body portion has an inner peripheral surface that guides movement of the plunger. The solenoid assembly includes a bobbin, a coil wound on the bobbin, and an exterior mold that encloses the bobbin with the wound coil from outside. A first annular space is formed between the inner housing and the solenoid assembly when the body portion is inserted into the bobbin, and the solenoid assembly is mounted on the inner housing. The first annular space is used for mounting a first sealing member in an annular shape (such as an O-ring). The first annular space is an annular space that is formed along a peripheral area of the body portion. The first annular space is defined by a first surface, a second surface, a third surface, and a fourth surface. The first surface is formed adjacent to the flange portion on an outer peripheral surface of the body portion. The second surface is formed in a position at an interval of a distance LA1 from the first surface among surfaces of the exterior mold in a direction perpendicular to the axial direction. The second surface faces the first surface. The third surface is formed on the other end surface of the flange portion. The fourth surface is formed in a position at an interval of a distance LB1 from the third surface among surfaces of the bobbin in the axial direction. The fourth surface faces the third surface. When the first sealing member has an outer diameter OD1, any cross-sectional surface of the space forms approximately a rectangular shape that satisfies relations expressed by: the distance LA1 < the outer diameter OD1, and the distance LA1 < the distance LB1. In the cross-sectional surface of the first annular space where the first sealing member is mounted in the first annular space, respective positions where the first surface and the second surface are in close contact with the first sealing member are formed at the third surface side with respect to an intersection point (in other words, a boundary part between the second surface and the fourth surface) in the axial direction. The second surface and the fourth surface cross one another at the intersection point.

With the first aspect of the invention, the distance LA1 between the first surface and the second surface in the first annular space is shorter than the outer diameter OD1 of the first sealing member. Thus, when the first sealing member is mounted in the first annular space, the first sealing member is brought in close contact with two portions of the first surface and the second surface while being crushed by the first surface and the second surface and deformed. In contrast, with the first aspect of the invention, the distance LB1 between the third surface and the fourth surface in the first annular space is longer than the distance LA1 between the first surface and the second surface. Thus, the first sealing member is not in close contact with the third surface and the fourth surface enough to provide sufficient seal effect. That is, the first aspect of the invention has a structure where the first sealing member is in close contact with two surfaces of the first surface and the second surface so as to seal the gap between the inner housing and the solenoid assembly. In other words, the first sealing member is in close contact with two members of the inner housing with the first surface and the exterior mold with the second surface. This seals the gap between the inner housing and the solenoid assembly.

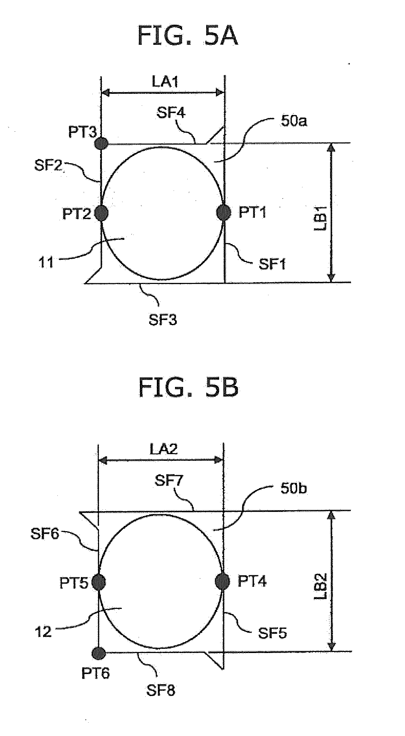

Here, the intersection point where the second surface and the fourth surface cross one another is the boundary part where the bobbin is in contact with the exterior mold. When the gap between the bobbin and the exterior mold is generated, water may leak into the gap. However, in the first aspect of the invention, the positions (see PT1 and PT2 in FIG. 5A) where the first sealing member is in close contact with the first surface and the second surface are formed at the third surface side (the lower side in FIG. 5A) in the axial direction with respect to the intersection point (see PT3 in FIG. 5A) where the second surface and the fourth surface cross one another. This prevents water from leaking into the inside of the first sealing member even if water leaks from the gap between the inner housing and the solenoid assembly. Thus, this surely prevents the trouble such as short-circuiting of the coil due to water leakage from between the bobbin and the exterior mold.

Accordingly, with the first aspect of the invention, the sealing surfaces are simply formed in the two members. This reduces poor contact of the sealing surfaces due to variation in processing accuracy, thus ensuring stabilized sealing performance. Additionally, with the first aspect of the invention, the stabilized sealing performance reduces the trouble such as short-circuiting of the solenoid assembly.

According to a second aspect of the invention, in the aforementioned configuration, the bobbin includes a bobbin main body in a cylindrical shape and a pair of flange members. The pair of flange members outwardly bends on both ends of the bobbin main body. The pair of flange members includes respective protrusions. The protrusions protrude in a direction away from one another along the axial direction. The exterior mold has a configuration that encloses the bobbin from outside such that the protrusions are wrapped.

For example, the bobbin that has a smooth outer surface without irregularity is covered with the exterior mold. If deterioration of the first sealing member reduces sealing performance and causes water leakage at the boundary between the bobbin and the exterior mold by any chance, water directly transmits to the boundary between the bobbin and the exterior mold and may reach the coil. However, with the second aspect of the invention, the exterior mold encloses the bobbin such that the protrusions in the flange members of the bobbin are wrapped. Water has to go beyond the protrusions in order to reach the coil. That is, with the second aspect of the invention, water travels the long distance to reach the coil, thus having difficulty in leaking into the coil. The second aspect of the invention is more excellent in waterproof property.

According to a third aspect of the invention, in the aforementioned configuration, the other end surface of the flange portion includes an annular support surface and an annular level difference surface. The annular support surface is formed in a circular shape along the peripheral area of the body portion. The annular support surface supports the exterior mold. The annular level difference surface is continuous with the annular support surface. The annular level difference surface is formed in a circular shape. The annular level difference surface is in a position at a lower level than a position of the annular support surface. The third surface is formed on the annular support surface. The casing has a configuration that covers the solenoid assembly in a state where an end surface of the casing is in contact with the annular level difference surface.

With the third aspect of the invention, the end surface of the casing is in contact with the annular level difference surface, which is in the position at a lower level than the position of the annular support surface. If the gap is generated between the end surface of the casing and the annular level difference surface, and water leaks from the gap by any chance, the first annular space where the first sealing member is mounted is in a position at a higher level than a position of the annular level difference surface. Thus, water has difficulty in reaching the first annular space. That is, the third aspect of the invention has a structure where water has difficulty in getting through the position where the first sealing member is mounted. This further improves waterproof property.

According to a fourth aspect of the invention, the casing includes a casing main body in a cylindrical shape, and a lid member. The lid member covers one end of the casing main body. The lid member has an opening. The body portion passes through the opening. The second annular space is formed between the casing, the solenoid assembly, and the inner housing when the solenoid assembly mounted on the inner housing is covered with the casing and a distal end of the body portion is exposed from the opening. The second annular space is for mounting a second sealing member in an annular shape (such as an O-ring). The second annular space is an annular space that is formed along the peripheral area of the body portion. The second annular space is defined by a fifth surface, a sixth surface, a seventh surface, and an eighth surface. The fifth surface is formed on an end portion at an opposite side of the flange portion on the outer peripheral surface of the body portion. The sixth surface is formed in a position at an interval of a distance LA2 from the fifth surface among the surfaces of the exterior mold in a direction perpendicular to the axial direction. The sixth surface faces the fifth surface. The seventh surface is formed at a back side of the lid member. The eighth surface is formed in a position at an interval of a distance LB2 from the seventh surface among the surfaces of the bobbin in the axial direction. The eighth surface faces the seventh surface. When the second sealing member has an outer diameter OD2, any cross-sectional surface of the space forms approximately a rectangular shape that satisfies relations expressed by: the distance LA2 < the outer diameter OD2, and the distance LA2 < the distance LB2. In the cross-sectional surface of the second annular space where the second sealing member is mounted in the second annular space, respective positions where the fifth surface and the sixth surface are in close contact with the second sealing member is formed at the seventh surface side with respect to an intersection point (in other words, a boundary part between the sixth surface and the eighth surface) in the axial direction. The sixth surface and the eighth surface cross one another at the intersection point.

With the fourth aspect of the invention, the distance LA2 between the fifth surface and the sixth surface in the second annular space is shorter than the outer diameter OD2 of the second sealing member. Thus, when the second sealing member is mounted in the second annular space, the second sealing member is brought in close contact with two portions of the fifth surface and the sixth surface while being crushed by the fifth surface and the sixth surface and deformed. In contrast, with the fourth aspect of the invention, the distance LB2 between the seventh surface and the eighth surface in the second annular space is longer than the distance LA2 between the fifth surface and the sixth surface. Thus, the second sealing member is not in close contact with the seventh surface and the eighth surface enough to provide sufficient seal effect. That is, the fourth aspect of the invention has a structure where the second sealing member is in close contact with two surfaces of the fifth surface and the sixth surface so as to seal the gap between the inner housing and the solenoid assembly. In other words, the second sealing member is in close contact with two members of the inner housing with the fifth surface and the exterior mold with the sixth surface. This seals the gap between the inner housing and the solenoid assembly.

Here, the intersection point where the sixth surface and the eighth surface cross one another is the boundary part where the bobbin is in contact with the exterior mold. When the gap between the bobbin and the exterior mold is generated, water may leak into the gap. However, in the fourth aspect of the invention, the positions (see PT4 and PT5 in FIG. 5B) where the second sealing member is in close contact with the fifth surface and the sixth surface are formed at the seventh surface side (the upper side in FIG. 5B) in the axial direction with respect to the intersection point (see PT6 in FIG. 5B) where the sixth surface and the eighth surface cross one another. This prevents water from leaking into the inside of the second sealing member even if water leaks from the gap between the inner housing and the solenoid assembly. Thus, this surely prevents the trouble such as short-circuiting of the coil due to water leakage from between the bobbin and the exterior mold.

Accordingly, with the fourth aspect of the invention, the sealing surfaces are simply formed in the two members. This reduces poor contact of the sealing surfaces due to variation in processing accuracy, thus ensuring stabilized sealing performance. Additionally, with the fourth aspect of the invention, the stabilized sealing performance reduces the trouble such as short-circuiting of the solenoid assembly.

According to a fifth aspect of the invention, in the aforementioned configuration, the inner housing includes a stator, a yoke, and a cylindrical member. The stator is made of magnetic material. The yoke is coaxially disposed with respect to the stator. The yoke is made of magnetic material. The cylindrical member is made of non-magnetic material. The cylindrical member is disposed in a position between the stator and the yoke. The cylindrical member is coaxially disposed with respect to the stator. The cylindrical member integrally couples the stator and the yoke together. The stator includes the flange portion and a fixed iron core that protrudes in the axial direction from the other end surface of the flange portion. The body portion includes the fixed iron core, the yoke, and the cylindrical member. The yoke has an inner peripheral surface. The inner peripheral surface guides movement of the plunger. A first level difference portion at a lower level is formed in an end portion at the stator side on an outer peripheral surface of the yoke. The fixed iron core has a base end surface facing the plunger. A magnetic controller is disposed on the base end surface. The magnetic controller is a circular member that axially protrudes and controls a magnetic force. A second level difference portion at a lower level is formed in an end portion at the base end surface side on an outer peripheral surface of the fixed iron core. The cylindrical member is formed such that an inner diameter at one end side is approximately the same as an outer diameter of the first level difference portion, and an inner diameter at another end side is approximately the same as an outer diameter of the second level difference portion. The inner housing is formed such that the cylindrical member and the yoke are bonded by welding in a state where the one end side of the cylindrical member fits the first level difference portion, and the cylindrical member and the stator are bonded by welding in a state where the other end side of the cylindrical member fits the second level difference portion.

With the fifth aspect of the invention, in a state where the one end side of the cylindrical member is fitted in the first level difference portion of the yoke from the outside while the other end side of the cylindrical member is fitted in the second level difference portion of the stator from the outside, bonding respective coupling portions by welding allows forming the inner housing. Accordingly, this eliminates the need for machining on the inner peripheral surface after welding the respective members. Thus, the fifth aspect of the invention reduces the number of processing operations of the inner housing, and reduces manufacturing cost.

With the fifth aspect of the invention, this eliminates the need for machining on the inner peripheral surface of the inner housing. The inner housing does not need to have a structure where an opening for inserting a blade edge of a machine tool is preliminarily disposed in the inner housing, and the opening is then covered after machining. Accordingly, this eliminates the need for a member for covering the opening, and reduces the number of components, thus further reducing cost. Additionally, the fifth aspect of the invention eliminates the need for machining on the inner peripheral surface of the inner housing. This prevents variation in quality of the inner housing due to machining accuracy, and stabilizes quality as advantageous effects.

The one end side of the inner diameter of the cylindrical member according to the fifth aspect of the invention has approximately the same size as that of the outer diameter of the first level difference portion. This means that the inner diameter of the cylindrical member at the one end side has a size that allows press-fitting or a similar method to fit the cylindrical member in the first level difference portion. Similarly, the inner diameter of the cylindrical member at the other end side has approximately the same size as that of the outer diameter of the second level difference portion. This means that the inner diameter of the cylindrical member at the other end side has a size that allows press-fitting or a similar method to fit the cylindrical member in the second level difference portion.

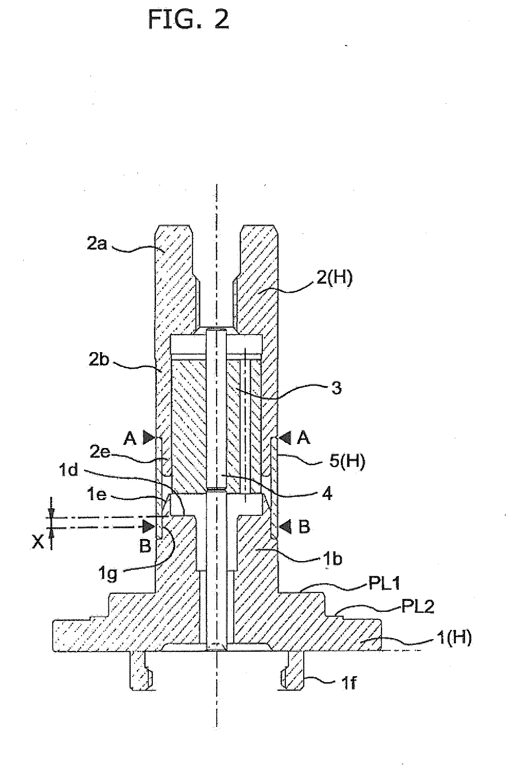

A weld line between the cylindrical member and the stator is preferred to be formed in a position at a predetermined interval (see a spacing X in FIG. 2) from the base end surface in an opposite direction of a projecting direction of the circular member. The circular member constitutes the magnetic controller. The magnetic controller is an important portion that determines performance of the electromagnetic drive unit. Therefore, it should be prevented that, for example, deterioration in coaxiality or eccentricity accuracy of the magnetic controller due to welding distortion and change in magnetic property due to heat influence of welding. With this configuration, the weld line between the cylindrical member and the stator are formed in a position distant from the magnetic controller. This rarely allows influence on the magnetic controller due to welding. Accordingly, this prevents deterioration in performance of the electromagnetic drive unit even in the case where the cylindrical member and the stator are bonded by welding.

It is preferred that the cylindrical member and the yoke be bonded by butt-welding while the cylindrical member and the stator be bonded by lap-welding. The yoke has the inner peripheral surface that is a sliding surface where the plunger slides. In view of this, distortion of the sliding surface due to welding should be avoided. With this configuration, the cylindrical member and the yoke are bonded by butt-welding. This prevents the inner peripheral surface of the yoke, that is, the sliding surface of the plunger from being distorted due to influence of welding. Additionally, with this configuration, the cylindrical member and the stator are bonded by lap-welding. This saves labor for control of welding operation compared with operation for bonding by butt-welding. This improves operation efficiency, thus further shortening operation time for manufacturing the inner housing and reducing cost of the inner housing.

### ADVANTAGEOUS EFFECTS OF INVENTION

With the present invention, the two members of the inner housing and the exterior mold are in close contact with the sealing member, thus forming a structure that seals the gap between the inner housing and the solenoid assembly. This reduces variation in size of each member compared with the conventional sealing structure where the three members are in close contact with the sealing member. Accordingly, this ensures stabilized sealing performance. Additionally, with the present invention, the inner housing has a simple configuration formed only by fitting each of the yoke and the stator into the cylindrical member, and welding them. This reduces the number of processing operations compared with the conventional configuration, thus reducing cost.

### BRIEF DESCRIPTION OF DRAWINGS

[Fig. 1] FIG. 1 is a longitudinal cross-sectional view of a solenoid valve with an electromagnetic drive unit according to an exemplary embodiment of the present invention.
[Fig. 2] FIG. 2 is an enlarged longitudinal cross-sectional view of an inner housing part of the electromagnetic drive unit illustrated in FIG. 1.
[Fig. 3] FIG. 3 is an enlarged cross-sectional view of C part of the electromagnetic drive unit illustrated in FIG. 1.
[Fig. 4] FIG. 4 is an enlarged cross-sectional view of D part of the electromagnetic drive unit illustrated in FIG. 1.
[Figs. 5A and 5B] FIGs. 5A and 5B are diagrams illustrating an O-ring mounted in an annular space illustrated in FIG. 1, FIG. 5A is a diagram illustrating an O-ring mounted in a first annular space, and FIG. 5B is a diagram illustrating an O-ring mounted in a second annular space.

### DESCRIPTION OF EMBODIMENTS

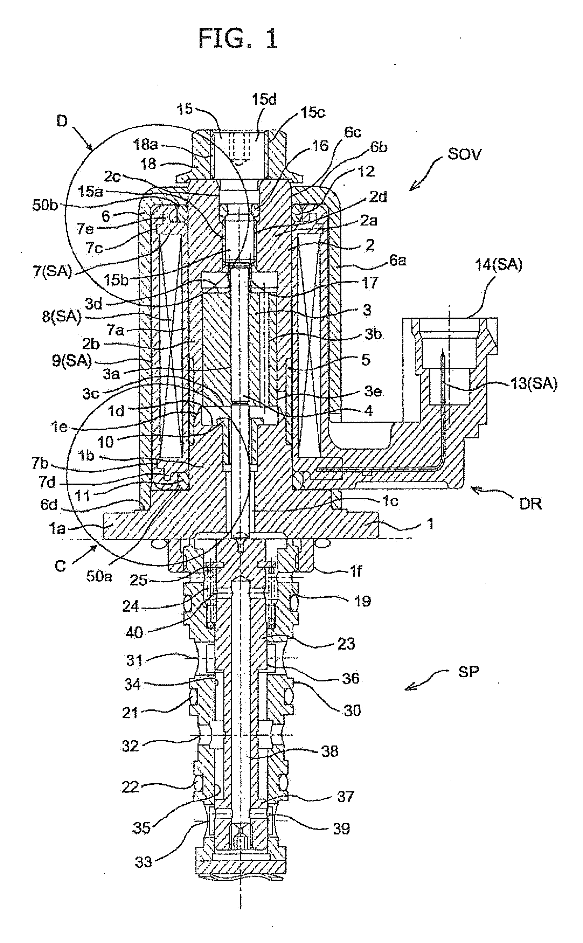

Hereinafter, a description will be given of an exemplary embodiment of the present invention by referring to FIGS. 1 to 5B. As illustrated in FIG. 1, an electromagnetic drive unit DR according to the exemplary embodiment of the present invention has one end that is coupled to a directional control valve unit SP, which is a driven device, thus being used as a solenoid valve SOV. This solenoid valve SOV is a three-port, two-position, directional control valve that is actuated by an electromagnetic actuation system. For example, the solenoid valve SOV is used for prevention of cabin interference and depth control of a mini shovel, tilt angle control of a hydraulic piston and a motor, control of a spool and a throttle valve of a control valve, a clutch pack of an AT car, clutch control for changing forward and reverse, and similar use.

The electromagnetic drive unit DR includes an inner housing H. The inner housing H includes a stator 1 made of magnetic material, a ring (cylindrical member) 5 made of non-magnetic material, and a yoke 2 made of magnetic material. The stator 1, a ring 5, and the yoke 2, which constitute the inner housing H, are coaxially arranged. The solenoid assembly SA is mounted on the inner housing H to surround an outer peripheral surface of the inner housing H. The inner housing H also houses a plunger 3 inside. The solenoid assembly SA includes a socket 14 for power feeding. The power feeding from the socket 14 allows the plunger 3 to move in the axial direction (the up-down direction in FIG. 1) while being guided along an inner peripheral surface of the

### inner housing H.

The stator 1 has a configuration including a disk-shaped flange portion 1a, a column-shaped fixed iron core 1b, and a through hole 1c. The flange portion 1a includes a mounting portion 1f where the directional control valve unit SP is mounted on one end surface. The fixed iron core 1b projects from the other end surface of this flange portion 1a in the axial direction. The flange portion 1a and the fixed iron core 1b are integrated together. The through hole 1c passes through the flange portion 1a and the fixed iron core 1b axially. The fixed iron core 1b constitutes a part of a body portion of the inner housing H, and has one end surface that functions as a base end surface 1d facing one end surface 3c of the plunger 3.

This base end surface 1d has a magnetic controller 1e to control a magnetic force. This magnetic controller 1e includes a circular member that projects from a peripheral edge portion of the base end surface 1d in the axial direction. A description will be given of a shape of the magnetic controller 1e in detail. As illustrated in FIG. 1, an outer diameter of the magnetic controller 1e gradually becomes smaller from the base end surface 1d toward a distal end (in an upper direction of FIG. 1) while an inner diameter of the magnetic controller 1e remains constant in size along the axial direction of the fixed iron core 1b. At the distal end of the magnetic controller 1e, a circular flat surface with a small width in plan view is formed. In other words, the magnetic controller 1e according to this embodiment has a hollow truncated cone shape that is formed as follows. A hole is formed to pass through a solid truncated cone-shaped member along the axial direction. The hole has a diameter slightly smaller than an outer diameter of a top surface of the solid truncated cone-shaped member.

The fixed iron core 1b, which constitutes the stator 1, has an end portion at the base end surface 1d side of the outer peripheral surface. At the end portion, a second level difference portion 1g (see FIG. 2) at a lower level is formed. This second level difference portion 1g is a portion in which the ring 5 is fitted, and is continuous with the outer peripheral surface of the magnetic controller 1e. A stopper 10 is fitted in the through hole 1c from the base end surface 1d side of the fixed iron core 1b. This stopper 10 restricts a range of motion such that the plunger 3 is not completely brought in contact with the base end surface 1d of the fixed iron core 1b.

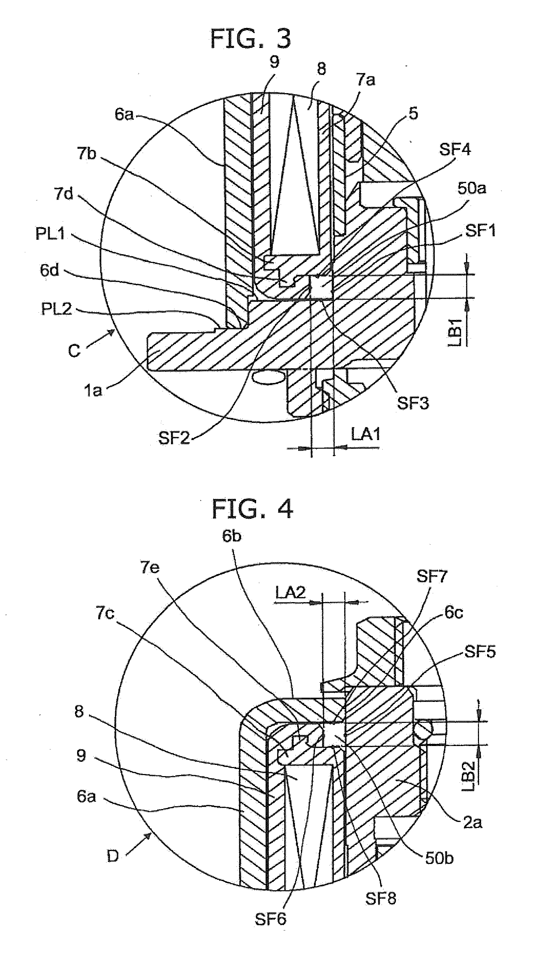

The flange portion 1a has the other end surface that includes, as illustrated in FIG. 2, an annular support surface PL1 and an annular level difference surface PL2. The annular support surface PL1 is formed in a circular shape along a peripheral area of the fixed iron core 1b. The annular level difference surface PL2 is continuous with the annular support surface PL1, and formed in a circular shape. The annular support surface PL1 is a surface that supports the exterior mold 9 as illustrated in FIG. 3. As described in detail later, a part of the annular support surface PL1 functions as a third surface SF3 that defines a first annular space 50a for mounting an O-ring (a first sealing member) 11. In contrast, as illustrated in FIG. 3, the annular level difference surface PL2 is formed in a position at a lower level than that of the annular support surface PL1, and is a surface in contact with an end surface 6d of a casing 6.

Next, the plunger 3 has a configuration including a cylindrically-shaped member made of magnetic material with an outer peripheral surface coated by a resin layer 3e. The resin layer 3e is made of non-magnetic material with a uniform thickness. This resin layer 3e is made of, for example, nylon-based resin, and has a thickness in a range of 0.03 mm to 0.2 mm, considering the durability of the resin layer 3e and sliding resistance with an inner peripheral surface of the yoke 2. The plunger 3 has a through hole 3a that passes through in the axial direction. Press-fitting a rod-shaped pin 4 into this through hole 3a integrally forms the plunger 3 and the pin 4. The pin 4 moves in the axial direction along with movement of the plunger 3 in the axial direction. Subsequently, the pin 4 presses a spool 23 described later. This moves the spool 23 in the axial direction.

The one end surface 3c of the plunger 3 is a surface that faces the base end surface 1d where the magnetic controller 1e is disposed. The other end surface 3d is a surface that faces a bottom portion 2a of the yoke 2 described next. The reference numeral 3b denotes a through hole 3b that is disposed along the axial direction in a position distant from the axial center in a radial direction. The through hole 3b, which is described in detail later, is a flow passage where oil supplied from the directional control valve unit SP side flows.

Next, the yoke 2 includes the bottom portion 2a, which is a magnetic path, and a long cylindrical portion 2b, which extends from the bottom portion 2a in the axial direction. The long cylindrical portion 2b has an inner peripheral surface that is a sliding contact surface in sliding contact with the outer peripheral surface of the plunger 3. The plunger 3 is guided by the inner peripheral surface of the long cylindrical portion 2b, and movable in the axial direction. On the other hand, the outer peripheral surface of the yoke 2 has an end portion at the stator 1 side, that is, an end portion at a distal end side of the long cylindrical portion 2b. The end portion includes a first level difference portion 2e (see FIG. 2) at a lower level. The ring 5 is fitted in the first level difference portion 2e.

The yoke 2 has the bottom portion 2a where a through hole 2c is disposed along the axial direction. This through hole 2c has a female thread 2d formed inside. A screw 15, which is described next, is inserted into the through hole 2c.

This screw 15 is a member that includes a head 15d having a male thread 15c and a shaft 15b, which has a male thread 15a and an outer diameter smaller than that of the head 15d. While the screw 15 is inserted into the through hole 2c, the distal end of the screw 15 presses the end surface 3d of the plunger 3 via a spring 17. This pressing force may be adjusted by rotating the screw 15 in positive or negative direction. That is, this screw 15 is disposed to adjust an operational force of the spool 23. A nut 18 is a locking nut to prevent looseness of the screw 15, and has an inner peripheral surface where a female thread 18a with the same size as that of the male thread 15c is formed. An O-ring 16 prevents leakage of oil inside of the inner housing H to the outside.

The fixed iron core 1b, the yoke 2, and the ring 5 in this embodiment correspond to a body portion of an inner housing according to the present invention. The flange portion 1a in this embodiment corresponds to a flange portion of the inner housing according to the present invention.

Next, the solenoid assembly SA surrounds the outside of the inner housing H, and includes a bobbin 7, a coil 8, an exterior mold 9, a terminal 13, and a socket 14. The coil 8 winds around the bobbin 7. The exterior mold 9 is fitted onto the bobbin 7 to cover the coil 8. The terminal 13 is electrically coupled to the coil 7. A female plug (not shown) is to be inserted into the socket 14. Inserting the female plug into the socket 14 allows controlling power feeding to the coil 8 from the outside via the terminal 13. The end surface 3c of the plunger 3 is closely separated from the base end surface 1d of the stator 1.

The bobbin 7 includes a bobbin main body 7a in a cylindrical shape and a pair of flange members 7b and 7c, which outwardly bend on both ends of the bobbin main body 7a. The flange member 7b includes a protrusion 7d that protrudes in the downward direction of FIG. 1 while the flange member 7c includes a protrusion 7e that protrudes in the upward direction of FIG. 1. That is, these protrusions 7d and 7e protrude along the axial direction in a direction away from each other. The exterior mold 9 encloses the bobbin 7 from outside so as to wrap (cover) the protrusions 7d and 7e. Therefore, interfacial boundaries between: the exterior mold 9 and the flange member 7b of the bobbin 7, and the exterior mold 9 and the flange member 7c of the bobbin 7 are uneven due to the protrusions 7d and 7e.

The solenoid assembly SA is covered by the casing 6. The casing 6 includes a casing main body 6a in a cylindrical shape and a lid member 6b, which covers one end of the casing main body 6a. This lid member 6b includes an opening 6c, which passes through the bottom portion 2a of the yoke 2. Accordingly, mounting the casing 6 on the inner housing H exposes the bottom portion 2a of the yoke 2 through the opening 6c of the lid member 6b. This allows operating the screw 15 after the casing 6 is mounted on the inner housing H.

The electromagnetic drive unit DR thus configured has a sealing structure that prevents water from leaking into the coil 8 of the solenoid assembly SA. A description will be given of this sealing structure according to this embodiment below. In this embodiment, while the solenoid assembly SA is mounted on the inner housing H, the first annular space 50a and the second annular space 50b are formed between an outer peripheral surface of the inner housing H and the exterior mold 9. The first annular space 50a is an annular space that is formed along the peripheral area of the fixed iron core 1b. Mounting the O-ring (the first sealing member) 11 in the first annular space 50a seals the gap between the inner housing H and the solenoid assembly SA. The second annular space 50b is an annular space that is formed along an outer peripheral surface of the bottom portion 2a of the yoke 2. Mounting the O-ring (the second sealing member) 12 in the second annular space 50b seals the gap between the inner housing H and the solenoid assembly SA.

As illustrated in FIG. 3, the first annular space 50a is an annular space with a cross-sectional surface in approximately a rectangular shape that is defined by four surfaces of SF1 to SF4. The first surface SF1 is a surface that is formed adjacent to the flange portion 1a on an outer peripheral surface of the fixed iron core 1b. The second surface SF2 is formed in a position at an interval of a distance LA1 from the first surface SF1 among the surfaces of the exterior mold 9 in a direction (the right-left direction in FIG. 3) perpendicular to the axial direction (the up-down direction in FIG. 3). The second surface SF2 is a surface that faces the first surface SF1. The third surface SF3 is a surface that is formed in the annular support surface PL1 of the flange portion 1a. The fourth surface SF4 is a surface that is not in close contact with the exterior mold 9 among the surfaces of the flange member 7b of the bobbin 7. The fourth surface SF4 is formed in a position at an interval of a distance LB1 from the third surface SF3 in the axial direction, and is a surface that faces the third surface SF3.

Here, in this first annular space 50a, assume that the O-ring 11 has a cross-sectional surface with an outer diameter OD1. In this case, any cross-sectional surface of the space 50a satisfies a relation expressed by the distance LA1 < the outer diameter OD1 < the distance LB1. As illustrated in FIG. 5A, in the state where the O-ring 11 is mounted in the first annular space 50a, a position PT1 where the first surface SF1 is in close contact with the O-ring 11 and a position PT2 where the second surface SF2 is in close contact with the O-ring 11 are formed at the third surface SF3 side in the axial direction (the up-down direction in FIG. 5A) with respect to an intersection point PT3 where the second surface SF2 and the fourth surface SF4 cross one another. That is, a boundary between the exterior mold 9 and the flange member 7b of the bobbin 7 is disposed in a position of the intersection point PT3 while the intersection point PT3 is disposed on the inside (at the fourth surface SF4 side with respect to PT1 and PT2 in the axial direction, that is, at the upper side with respect to PT1 and PT2 in FIG. 5A) of the positions PT1 and PT2 where the O-ring 11 is in close contact with the surfaces SF1 and SF2. Accordingly, the boundary between the exterior mold 9 and the flange member 7b of the bobbin 7 is positioned on the inside of a position sealed by the O-ring 11.

Therefore, even if water is leaked from a gap between the end surface 6d of the casing 6 and the annular level difference surface PL2 by any chance, the water is usually impossible to be leaked into the boundary part between the exterior mold 9 and the flange member 7b of the bobbin 7, that is, the position of PT3. This is because the O-ring 11 is in close contact with the first surface SF1 in the position of PT1 while the O-ring 11 is in close contact with the second surface SF2 in the position of PT2. Additionally, as illustrated in FIG. 3, the first annular space 50a is disposed in a position at a higher level than that of the annular level difference surface PL2. Thus, the water has difficulty in reaching the annular support surface PL1 from the annular level difference surface PL2. Accordingly, this exemplary embodiment surely prevents water from leaking into the coil 8.

Additionally, only two members of the exterior mold 9 and the inner housing H are in close contact with the O-ring 11 so as to form the sealing surface, thus ensuring the stabilized sealing performance. The protrusion 7d is wrapped by the exterior mold 9 in this structure. Accordingly, even if deterioration of the O-ring 11 degrades the sealing performance by any chance, water mostly has difficulty in going beyond the protrusion 7d to be leaked into the coil 8. This rarely causes a trouble such as short-circuiting of the coil 8.

In contrast, as illustrated in FIG. 4, the second annular space 50b is an annular space with a cross-sectional surface in approximately a rectangular shape that is defined by the four surfaces of SF5 to SF8. The fifth surface SF5 is a surface formed in an end portion of the bottom portion 2a of the yoke 2. The sixth surface SF6 is formed in a position at an interval of a distance LA2 from the fifth surface SF5 among the surfaces of the exterior mold 9 in a direction (the right-left direction in FIG. 4) perpendicular to the axial direction (the up-down direction in FIG. 4). The sixth surface SF6 is a surface that faces the fifth surface SF5. The seventh surface SF7 is a surface that is formed at the back side of the lid member 6b. The eighth surface is a surface that is not in close contact with the exterior mold 9 among surfaces of the flange member 7c of the bobbin 7. The eighth surface is a surface that is formed in a position at an interval of a distance LB2 from the seventh surface SF7 in the axial direction, and faces the seventh surface SF7.

Here, in the second annular space 50b, assume that the O-ring 12 has a cross-sectional surface with an outer diameter OD2. In this case, any cross-sectional surface of the space 50b satisfies a relation expressed by the distance LA2 < the outer diameter OD2 < the distance LB2. As illustrated in FIG. 5B, in the state where the O-ring 12 is mounted in the second annular space 50b, a position PT4 where the fifth surface SF5 is in close contact with the O-ring 12 and a position PT5 where the sixth surface SF6 is in close contact with the O-ring 12 are formed at the seventh surface SF7 side in the axial direction (the up-down direction in FIG. 5B) with respect to an intersection point PT6 where the sixth surface SF6 and the eighth surface SF8 cross one another. That is, a boundary between the exterior mold 9 and the flange member 7c of the bobbin 7 is disposed in a position of the intersection point PT6 while the intersection point PT6 is disposed on the inside (at the eighth surface SF8 side with respect to PT4 and PT5 in the axial direction, that is, at the lower side with respect to PT4 and PT5 in FIG. 5B) of the positions PT4 and PT5 where the O-ring 12 is in close contact with the surfaces SF5 and SF6. Accordingly, the boundary between the exterior mold 9 and the flange member 7c of the bobbin 7 is positioned on the inside of a position sealed by the O-ring 12.

Therefore, even if water is leaked from a gap between the opening 6c of the casing 6 and the bottom portion 2a of the yoke 2 by any chance, the water is usually impossible to be leaked into the boundary part between the exterior mold 9 and the flange member 7c of the bobbin 7, that is, the position of PT6. This is because the O-ring 12 is in close contact with the fifth surface SF5 in the position of PT4 while the O-ring 12 is in close contact with the sixth surface SF6 in the position of PT5. Accordingly, this exemplary embodiment prevents water from leaking into the coil 8.

Additionally, only two members of the exterior mold 9 and the inner housing H are in contact with the O-ring 12 so as to form the sealing surface, thus ensuring the stabilized sealing performance. The protrusion 7e is wrapped by the exterior mold 9 in this structure. Accordingly, even if deterioration of the O-ring 12 degrades the sealing performance by any chance, water mostly has difficulty in going beyond the protrusion 7e to be leaked into the coil 8. This rarely causes a trouble such as short-circuiting of the coil 8. In FIG. 3 and FIG. 4, the respective O-rings 11 and 12 are omitted for ease of explanation.

Next, a description will be given of a method for manufacturing the inner housing H. A first process is performed while the plunger 3 is enclosed as follows. First, the one end side of the ring 5 is fitted in the first level difference portion 2e of the yoke 2. Additionally, the other end side of the ring 5 is fitted in the second level difference portion 1g of the stator 1. Thus, the inner housing H is assembled. A description will be specifically given of the operations of this first process. First, the stopper 10 is press-fitted into the through hole 1c of the stator 1 from the base end surface 1d side. Subsequently, this press-fitting is performed until an end surface of the ring 5 is brought in contact with the second level difference portion 1g of the stator 1. In this state, while the plunger 3 where the pin 4 is press-fitted is inserted into the through hole 1c of the stator 1, the plunger 3 is mounted on the stator 1. Subsequently, another press-fitting is performed until an end surface of the first level difference portion 2e of the yoke 2 is brought in contact with the ring 5. This encloses the plunger 3 in the inner housing H.

Following this first process, a second process is performed. In the second process, a butt portion between the end surface at the one end side of the ring 5 and the first level difference portion 2e of the yoke 2 is bonded by butt-welding. A description will be specifically given of the operation of this second process. First, a portion adjacent to an end surface of the yoke 2 at the bottom portion 2a side is clamped. Subsequently, a pre-check for welding the yoke 2 and the ring 5 is performed. The pre-check includes checking whether or not the ring 5 is fitted in an inclined direction with respect to the yoke 2, whether or not a gap of the butt portion between the first level difference portion 2e of the yoke 2 and the end surface of the ring 5 is uniform, and a similar condition. Subsequently, a butt portion (A part in FIG. 2) between the first level difference portion 2e of the yoke 2 and the end surface of the ring 5 is bonded over the whole circumference by laser welding.

Following this second process, the other end side of the ring 5 and the second level difference portion 1g of the stator 1 are bonded by lap-welding as a third process. A description will be specifically given of the operation of this third process. A pre-check for welding the stator 1 and the ring 5 is performed. The pre-check includes checking whether or not the stator 1 is fitted in the ring 5 in an inclined direction with respect to the yoke 2, whether or not a gap of the butt portion between the second level difference portion 1g of the stator 1 and the end surface of the ring 5 is uniform, and a similar condition. Subsequently, an overlapping portion between the ring 5 and the second level difference portion 1g of the stator 1 is bonded over the whole circumference by laser welding. Quality control in the welding process is severer in the second process than that in the third process. Here, a weld line is formed in a position (B position in FIG. 2) at an interval of a predetermined spacing X from the base end surface 1d of the stator 1 in the opposite direction (the downward direction in FIG. 2) of a projecting direction (the upward direction in FIG. 2) of the circular member included in the magnetic controller 1e. Accordingly, the operations in the first to third processes are performed, and the inner housing H is then completed.

The electromagnetic drive unit DR thus configured includes the directional control valve unit SP that is coaxially mounted on the electromagnetic drive unit DR. This directional control valve unit SP includes a sleeve-shaped valve casing 30 and the spool 23 that is coaxially disposed inside of the valve casing 30. The valve casing 30 includes a supply port 31, which is to be coupled to a hydraulic pump (not shown), an output port 32, which is to be coupled to an actuator (not shown), and a drain port 33, which is to be coupled to a tank (not shown).

On the other hand, the spool 23 is mounted such that the one end side is brought in contact with the pin 4 of the electromagnetic drive unit DR. The spool 23 moves in the axial direction along with movement of the pin 4 in the axial direction. A spring 24 winds around this spool 23. The spring 24 has its one end, which is locked on an inner wall of the valve casing 30, and the other end in contact with a circular shim 25, which is fitted in the spool 23. Therefore, the spool 23 is housed in the valve casing 30 while being constantly pushed toward the stator 1 side (in the upward direction in FIG. 1) by a biasing force of the spring 24.

Additionally, the spool 23 has an outer peripheral surface where two lands 36 and 37 are disposed. In the case where the land 36 is in contact with a sealing surface 34, which is a part of the inner peripheral surface of the valve casing 30, the supply port 31 and the output port 32 are obstructed. In contrast, in the case where the land 36 is not in contact with the sealing surface 34 due to movement of the spool 23 in the axial direction, the supply port 31 and the output port 32 communicate with each other. Pressure oil supplied from the hydraulic pump to the supply port 31 flows in a space between the valve casing 30 and the spool 23, is output from the output port 32, and is guided to the actuator.

In the case where the land 37 is in contact with a sealing surface 35, which is a part of the inner peripheral surface of the valve casing 30, the output port 32 and the drain port 33 are obstructed. In contrast, in the case where the land 37 is not in contact with the sealing surface 35 due to movement of the spool 23 in the axial direction, the output port 32 and the drain port 33 communicates with each other. Therefore, the pressure oil supplied to the actuator flows in the space between the valve casing 30 and the spool 23, and returns to the tank from the drain port 33.

In this embodiment, a flow passage 38 is disposed along the axial direction of the spool 23. This flow passage 38 communicates with an inlet 39 and an outlet 40, which are formed on the outer peripheral surface of the spool 23. The oil inside the tank is guided from the drain port 33 to the inlet 39, flows out from the outlet 40 through the flow passage 38, passes through the through hole 1c from the end surface of the flange portion 1a of the stator 1, and is directly guided into the inner housing H of the electromagnetic drive unit DR. Subsequently, the oil guided into the inner housing H passes through the through hole 3b of the plunger 3, and flows into a space between the plunger 3 and the bottom portion 2a of the yoke 2. Accordingly, the oil inside the tank passes through the inside of the spool 23 of the directional control valve unit SP, and is guided into the inner housing H of the electromagnetic drive unit DR. The inner housing H is immersed in oil. Needless to say, a coupling portion between the valve casing 30 and the mounting portion 1f of the stator 1 is sealed to prevent oil leakage.

The valve casing 30 is surrounded by a casing (not shown) that includes flow passages separately coupled to three ports 31, 32, and 33. These flow passages are separated by O-rings 21 and 22 fitted onto the valve casing 30.

Subsequently, a description will be given of operation of the solenoid valve SOV, which includes the electromagnetic drive unit DR and the directional control valve unit SP. In order to make the solenoid valve SOV operate, first, the solenoid valve SOV is coupled to an electric power supply. This electric power supply may be a DC power supply or an AC power supply. For example, the DC power supply may use DC12V or DC24V and the AC power supply may use AC100V (50/60 Hz) or AC200V.

In an initial state where power feeding to the coil 8 is not performed, as illustrated in FIG. 1, the spool 23 is biased toward the stator 1 by the spring 24. Accordingly, the supply port 31 and the output port 32 communicate with each other while the output port 32 and the drain port 33 are obstructed.

When the electric power supply feeds power to the coil 8 through the terminal 13, the coil 8 generates a magnetic field (an exciting force). Therefore, the plunger 3 is attracted to the fixed iron core 1b by an attraction force corresponding to an amount of current. At this time, the plunger 3 is displaced toward the fixed iron core 16 while the resin layer 3e formed on the outer peripheral surface of the plunger 3 is brought into sliding contact with the inner peripheral surface of the long cylindrical portion 2b. This displacement amount of the plunger 3 is transmitted to the spool 23 via the pin 4, which is press-fitted into the plunger 3. This consequently moves the spool 23 in the downward direction of FIG. 1. In view of this, the supply port 31 and the output port 32 are obstructed due to the contact between the land 36 and the sealing surface 34. The output port 32 and the drain port 33 communicate with each other.

In the event that the power feeding to the coil 8 is stopped, the magnetic field generated by the coil 8 vanishes. A tensile force of the spring 24 moves the spool 23 in the upward direction of FIG. 1 to return the spool 23 in the initial state. Accordingly, when the power feeding to the coil 8 is not performed, the pressure oil from the hydraulic pump flows into the valve casing 30 from the supply port 31, and is supplied to the actuator via the output port 32. On the other hand, when the power feeding to the coil 8 is performed, the pressure oil supplied to the actuator flows inside of the valve casing 30 from the output port 32, and is discharged into the tank via the drain port 33.

As described above, the embodiment has a sealing structure where the O-rings 11 and 12 are in close contact with two members of the exterior mold 9 and the inner housing H. This reduces variation in size of a contacting surface of the O-ring compared with a sealing structure where the O-ring is in close contact with three members. This ensures stabilized sealing performance. Additionally, the inner housing H is simply manufactured by bonding the stator 1, the ring 5, and the yoke 2 together by welding. Machining on the inner peripheral surface of the inner housing H is not needed after the welding. Accordingly, this reduces the number of processing operations, and manufactures the inner housing at low cost with quick turnaround time. Additionally, bonding the yoke 2 and the ring 5 by butt-welding reduces deformation of the yoke 2 due to welding and a similar trouble, thus ensuring proper movement of the plunger 3.

Further, with this embodiment, bonding the stator 1 and the ring 5 by lap-welding saves labor for welding, thus significantly contributing to cost reduction. Further, the weld line of the lap-welding is formed in the position separated from the magnetic controller 1e with the spacing X with respect to the base end surface 1d. This eliminates a problem of variation in magnetic property due to heat influence of the lap-welding on the magnetic controller 1d. Additionally, after the second process for butt-welding on the ring 5 and the yoke 2, the third process for lap-welding on the ring 5 and the stator 1 is performed. This manufacturing method reduces variation in welding quality, and ensures simplified control of the welding process.

While in the aforementioned exemplary embodiment, the exterior mold 9 wraps the protrusions 7d and 7e, the bobbin 7 may employ a structure without the protrusions 7d and 7e. That is, the exterior mold 9 may employ a configuration where the exterior mold 9 wraps an outer surface of the bobbin 7 without the protrusions 7d and 7e. This configuration also allows respective two members of the exterior mold 9 and the inner housing H to be in close contact with the O-ring so as to seal the gap between the inner housing H and the solenoid assembly SA. Thus, this ensures stabilized sealing performance similarly to the aforementioned exemplary embodiment. Alternatively, a configuration with a plurality of the protrusions 7d and 7e may be possible. This configuration further prevents water from leaking into the coil 8, thus improving sealing performance.

In the aforementioned exemplary embodiment, the first annular space 50a has the configuration such that if the O-ring 11 has the outer diameter OD1, any cross-sectional surface of the space 50a satisfies the relation expressed by the distance LA1 < the outer diameter OD1 < the distance LB1. However, a configuration where any cross-sectional surface of the first annular space 50a satisfies a relation expressed by "the distance LA1 < the outer diameter OD1 ≤ the distance LB1" or "the distance LA1 < the distance LB1 ≤ the outer diameter OD1" may be possible. Similarly in the second annular space 50b, assume that the O-ring 12 has the outer diameter OD2. A configuration where any cross-sectional surface of the space 50b satisfies a relation expressed by "the distance LA2 < the outer diameter OD2 ≤ the distance LB2" or "the distance LA2 < the distance LB2 ≤ the outer diameter OD2" may be possible.

### REFERENCE SIGNS LIST

| | |
|---|---|
| 1 | stator |
| 1a | flange portion |
| 1b | fixed iron core (body portion) |
| 1d | base end surface |
| 1e | magnetic controller |
| 1g | second level difference portion |
| 2 | yoke (body portion) |
| 2e | first level difference portion |
| 3 | plunger |
| 5 | ring (cylindrical member) (body portion) |
| 6 | casing |
| 6a | casing main body |
| 6b | lid member |
| 6c | opening |
| 6d | end surface |
| 7 | bobbin |
| 7a | bobbin main body |
| 7b and 7c | flange member |
| 7d and 7e | protrusion |
| 8 | coil |
| 9 | exterior mold |
| 11 | O-ring (first sealing member) |
| 12 | O-ring (second sealing member) |
| 50a | first annular space |
| 50b | second annular space |
| SF1 to SF8 | first surface to eighth surface |
| PL1 | annular support surface |
| PL2 | annular level difference surface |
| H | inner housing |
| SA | solenoid assembly |
| DR | electromagnetic drive unit |
| SP | directional control valve unit (driven device) |
| SOV | solenoid valve |

## Claims

1. An electromagnetic drive unit comprising:
an inner housing that encloses a plunger;
a solenoid assembly mounted to surround the inner housing, the solenoid assembly being configured to control power feeding to move the plunger in an axail direction; and
a casing that covers the solenoid assembly,
wherein the inner housing includes:
a flange portion, a driven device being mounted at one end surface side of the flange portion; and
a hollow body portion disposed at another end surface side of the flange portion, the body portion having an inner peripheral surface that guides movement of the plunger; and
the solenoid assembly including:
a bobbin;
a coil wound on the bobbin; and
an exterior mold that encloses the bobbin with the wound coil from outside,
wherein a first annular space is formed between the inner housing and the solenoid assembly when the body portion is inserted into the bobbin, and the solenoid assembly is mounted on the inner housing, the first annular space being used for mounting a first sealing member in an annular shape,
the first annular space is an annular space that is formed along a peripheral area of the body portion, the first annular space being defined by:
a first surface formed adjacent to the flange portion on an outer peripheral surface of the body portion;
a second surface formed in a position at an interval of a distance LA1 from the first surface among surfaces of the exterior mold in a direction perpendicular to the axial direction, the second surface facing the first surface;
a third surface formed on the other end surface of the flange portion; and
a fourth surface formed in a position at an interval of a distance LB1 from the third surface among surfaces of the bobbin in the axial direction, the fourth surface facing the third surface;
when the first sealing member has an outer diameter OD1, any cross-sectional surface of the space forms approximately a rectangular shape, the rectangular shape satisfying relations expressed by: the distance LA1 < the outer diameter OD1, and the distance LA1 < the distance LB1; and
in the cross-sectional surface of the first annular space where the first sealing member is mounted in the first annular space, respective positions where the first surface and the second surface are in close contact with the first sealing member is formed at the third surface side with respect to an intersection point in the axial direction, the second surface and the fourth surface crossing one another at the intersection point.

2. The electromagnetic drive unit according to claim 1,
wherein the bobbin includes:
a bobbin main body in a cylindrical shape; and
a pair of flange members that outwardly bend on both ends of the bobbin main body, the pair of flange members including respective protrusions, the protrusions protruding in a direction away from one another along the axial direction; and
the exterior mold has a configuration that encloses the bobbin from outside such that the protrusions are wrapped.

3. The electromagnetic drive unit according to claim 1 or 2,
wherein the other end surface of the flange portion includes:
an annular support surface formed in a circular shape along the peripheral area of the body portion, the annular support surface supporting the exterior mold; and
an annular level difference surface that is continuous with the annular support surface, the annular level difference surface being formed in a circular shape, the annular level difference surface being in a position at a lower level than a position of the annular support surface;
the third surface is formed on the annular support surface; and
the casing has a configuration that covers the solenoid assembly in a state where an end surface of the casing is in contact with the annular level difference surface.

4. The electromagnetic drive unit according to any one of claims 1 to 3,
wherein the casing includes:
a casing main body in a cylindrical shape; and
a lid member that covers one end of the casing main body, the lid member having an opening, the body portion passing through the opening;
a second annular space is formed between the casing, the solenoid assembly, and the inner housing when the solenoid assembly mounted on the inner housing is covered with the casing, and a distal end of the body portion is exposed from the opening, the second annular space being for mounting a second sealing member in an annular shape;
the second annular space is an annular space that is formed along the peripheral area of the body portion, the second annular space being defined by:
a fifth surface formed on an end portion at an opposite side of the flange portion on the outer peripheral surface of the body portion;
a sixth surface formed in a position at an interval of a distance LA2 from the fifth surface among the surfaces of the exterior mold in a direction perpendicular to the axial direction, the sixth surface facing the fifth surface;
a seventh surface formed at a back side of the lid member; and
an eighth surface formed in a position at an interval of a distance LB2 from the seventh surface among the surfaces of the bobbin in the axial direction, the eighth surface facing the seventh surface;
when the second sealing member has an outer diameter OD2, any cross-sectional surface of the space forms approximately a rectangular shape, the rectangular shape satisfying relations expressed by: the distance LA2 < the outer diameter OD2, and the distance LA2 < the distance LB2; and
in the cross-sectional surface of the second annular space where the second sealing member is mounted in the second annular space, respective positions where the fifth surface and the sixth surface are in close contact with the second sealing member is formed at the seventh surface side with respect to an intersection point in the axial direction, the sixth surface and the eighth surface crossing one another at the intersection point.

5. The electromagnetic drive unit according to any one of claims 1 to 4,
wherein the inner housing includes:
a stator made of magnetic material;
a yoke coaxially disposed with respect to the stator, the yoke being made of magnetic material; and
a cylindrical member made of non-magnetic material, the cylindrical member being disposed in a position between the stator and the yoke, the cylindrical member being coaxially disposed with respect to the stator, the cylindrical member integrally coupling the stator and the yoke together;
the stator includes:
the flange portion; and
a fixed iron core that protrudes in the axial direction from the other end surface of the flange portion;
the body portion includes the fixed iron core, the yoke, and the cylindrical member, the yoke having an inner peripheral surface, the inner peripheral surface guiding movement of the plunger;
a first level difference portion at a lower level is formed in an end portion at the stator side on an outer peripheral surface of the yoke;
the fixed iron core has a base end surface that faces the plunger, a magnetic controller being disposed on the base end surface, the magnetic controller being a circular member that axially protrudes and controls a magnetic force;
a second level difference portion at a lower level is formed in an end portion at the base end surface side on an outer peripheral surface of the fixed iron core;
the cylindrical member is formed such that an inner diameter at one end side is approximately the same as an outer diameter of the first level difference portion, and an inner diameter at another end side is approximately the same as an outer diameter of the second level difference portion; and
the inner housing is formed such that the cylindrical member and the yoke are bonded by welding in a state where the one end side of the cylindrical member fits the first level difference portion, and the cylindrical member and the stator are bonded by welding in a state where the other end side of the cylindrical member fits the second level difference portion.
